# EUROPEAN PATENT SPECIFICATION

(11) **EP 3 414 014 B1**
(45) Date of publication and mention of the grant of the patent: **26.10.2022**
(21) Application number: 17750536.9
(22) Date of filing: 01.02.2017
(51) Int. Cl.: B02C 17/02, B02C 17/22, B02C 17/00, B02C 17/18, B22D 43/00, B22D 31/00

(54) **MULTI DIRECTIONAL RIFLING AND MULTI FLOW VARIABLE SPEED RIFLING FOR LINER SEGMENTS FOR CRUSHERS, RECLAIMERS, SEPARATORS AND CLEANERS FOR PRODUCTS**
MULTIDIREKTIONALE RILLUNG UND DREHZAHLVARIABLE MULTIFLUSS-RILLUNG FÜR VERKLEIDUNGSSEGMENTE FÜR BRECHER, RÜCKLADER, SEPARATOREN UND REINIGER FÜR PRODUKTE
RAYURES MULTIDIRECTIONNELLES ET RAYURES À VITESSE VARIABLE À FLUX MULTIPLES POUR SEGMENTS DE REVÊTEMENT DE BROYEURS, DE DISPOSITIFS DE RÉCUPÉRATION, DE SÉPARATEURS ET DE DISPOSITIFS DE NETTOYAGE POUR DES PRODUITS

(30) Priority: 08.02.2016 US 201662388839 P
(43) Date of publication of application: 19.12.2018
(73) Proprietor: Didion Manufacturing Company, Missouri 63376 (US)
(72) Inventor: DIDION, Michael, St. Peters, MO 63376 (US); DIDION, Mark, St. Peters, MO 63376 (US)
(74) Representative: Zeitler Volpert Kandlbinder Patentanwälte Partnerschaft mbB
(86) International application number: PCT/US2017/000011
(87) International publication number: WO 2017/139043

(56) References cited:
- EP-A1- 0 714 703
- WO-A2-2008/011231
- DE-A1- 19 718 285
- ES-A1- 2 128 924
- US-A- 1 207 174
- US-A- 2 268 661
- US-A- 2 743 060
- US-A- 3 998 262
- US-A- 3 998 262
- US-A- 4 154 290
- US-A- 5 095 968
- US-A1- 2005 116 077
- US-A1- 2015 069 159
- US-B1- 6 431 955
- US-B1- 6 431 955

## Description

### FIELD OF THE DISCLOSURE

This disclosure generally relates to a tumbling unit, usually formed of interlocking liners, and more particularly concerns the formation and usage of contoured rifling and vanes within the tumbling cylinder and which provide for the controlled movement of product and the removed debris and fines in select directions, regardless whether the tumbling cylinder is rotated in a clockwise or counterclockwise direction of movement during its operations.

### BACKGROUND

There are many tumbling units, crushers, casting shake-out units, that have been designed, manufactured, and marketed, in the past. These devices fit the category of rotary lump crushers, sand reclaimers, rotary slag separators, metal reclaimers, casting/sprue cleaners, and related types of machines. These machines run continuously, or by batch operation, depending upon their applications. Many of these types of machines have been invented by the family of Didions, as can be seen from their various United States patents as identified herein. These patents include U.S. Patent No. 3,998,262, upon A Casting Shake-Out Unit and Method of Operation. Other related patents include U.S. Patent No. 4,502,808, upon Liner Segments Retention Means. U.S. Patent No. 4,674,691, discloses a Dual Sand Reclaimer. U.S. Patent No. 5,095,968, shows a Rotary Media Drum With Cooling Components. U.S. Patent No. 5,016,827, shows a Sand Reclaiming Drum. A further U.S. Patent No. 5,267,603, discloses a Sand Reclaiming Drum With Media Recycler. The U.S. Patent No. 5,638,890, shows the Interlocking Liner For A Casting Shake-Out Unit. U.S. Patent No. 5,794,865, discloses the Rotary Media Drum For Reclaiming and Reclassifying Sand and Related Aggregates From Lump Materials. Patent No. 5,613,902, shows the Improved Sand Reclaimer. United States Patent No. 5,581,902, discloses the Rotary Dryer Drum. Patent No. 6,273,176, shows the Interlocking Liner for A Casting Shake-Out Unit. Patent No. 6,595,267, discloses the Liner Lock Key For A Tumbler Liner Segments. U.S. Patent No. 6,896,400, shows the Granular Product Cooling and Blending Rotary Drum. U.S. Patent No. 7,204,636, is upon the Granular and Aggregate Product For Blending, Cooling and Screening Rotary Drum. U.S. Patent No. 7,942,354, discloses the Rotary Tumbler and Metal Reclaimer. And, Patent No. 8,245,962, once again, shows a Rotary Tumbler and Metal Reclaimer. These are examples of the variety of developments that have been made by some of the inventors herein, upon various types of tumbling units, principally used in the casting, mining, and related industries.

Many other types of tumblers are also available in the art, as shown in their various patents. Examples of these can be seen in the United States Patent No. 4,050,635, upon the Method and Apparatus for Reclaiming Sand.

The U.S. Patent No. 5,806,774, shows a Centrifugal Impact Crusher.

U.S. Patent No. 5,950,944, to Larsen, shows a Laminar Mill Liner.

The patent to Musschoot, No. 8,544,782, shows another Liner for Drum and Method of Assembly. Another patent to Musschoot, et al., No. 6,453,982, shows a Sand Cleaning Apparatus. A tumbling apparatus is shown in the Patent to Musschoot, No. RE.33,542. A further patent is shown in U.S. 4,561,598, upon an Apparatus for Grinding, Milling, Crushing, Scrubbing, Sizing and/or Classifying Material. These are all examples of various types of materials classifying systems, that are available in the prior art.

Further prior art documents US 1 207 174 A, EP 0 714 703 A1, US 2005/116077 A1, and US 6 431 955 B1 disclose various batch mills which can be operated as bidirectional tumbling devices. Furthermore, the cylinders of the batch mills disclosed therein are provided with lifting elements or rifling, whereby the cross-sectional shapes thereof show various contours or profiles along a circumferential direction of the cylinder.

Another prior art document WO 2008/011231 A2 discloses a grinding mill comprising a grinding section which can rotate about a longitudinal axis in a forward direction and a plurality of lift elements which are arranged to travel in a generally circular path in a forward direction. At least some adjacent lift elements have a contact surface comprising a middle contact surface portion and two oppositely positioned side control surface contact portions which at least in part slant from said middle contact surface portion from one another. Thus, pairs of said adjacent lift elements have facing pairs of side surface contact portions which face one another and slant toward one another as valley surfaces to form a related valley region, when seen in a cross-sectional view of the grinding mill.

Another prior art document ES 2 128 924 A1 discloses an armoring or shield system with an undulated or wave-like shaping of coating for a tubular mill with two separate subsequent milling chambers. The purpose thereof is to improve the efficiency and effectiveness of milling in said mills by eliminating or significantly reducing the conventionally occuring dead zones of the mill as well as to reduce the pressure of the load on the walls and partitions or baffle plate of the mill. The second embodiment for the second chamber of the mill alternates wave sections with inclined positions and is therefore applicable for the two possible directions of rotation of the mill.

### SUMMARY OF THE DISCLOSURE

It is an object of the present invention to provide for the functionality of the rifling in moving the disposed product or metallics along the main cylinder, in selected directions, whether it be towards the outlet end of the cylinder, or in certain instances, towards the inlet end of the cylinder, or to move the product from approximate the outlet end and back into the center of the cylinder, to undertake further tumbling of the product or castings applied therein, to assure that complete cleansing takes place, upon the applied metallics or castings, before they exit out of the outlet end of the said main cylinder. In other words, it is an object to provide of a new multi-directional and multi-flow variable speed rifling that can provide for the controlled movement, in select directions, regardless whether the tumbling cylinder is rotated in a clockwise or counterclockwise direction. It is another object to extend the life of the tumbling unit to double.

These objects are solved by a multi-directional tumbling cylinder comprising the features of claim 1. Further embodiments are mentioned in the dependent claims.

The present disclosure contemplates the formation of a tumbling unit which because of its unique design and construction, can extend the life of current tumblers, sand reclaimers, casting shake-outs, by twice that of the prior devices.

These and other objects may become more apparent to those skilled in the art upon reviewing the summary of the invention as provided herein, and upon undertaking a study of the description of its preferred embodiments, in view of the drawings.

### BRIEF DESCRIPTION OF THE DRAWINGS

In referring to the drawings:
FIG. 1 provides an isometric view of a tumbling unit of this invention, comprising a sand reclaimer, casting shake-out, or the like;
FIG. 2 is an end view of the inlet end of the unit of FIG. 1;
FIG. 3 is a sectional view of a main cylinder tumbling unit taken along the line 3-3 of FIG. 1 not forming part of the present invention;
FIG. 4 is a sectional view of a modified dual cylinder tumbling unit of this invention, taken along the line 4-4 of FIG. 1;
FIG. 5 is a plan view taken along the center of the tumbling unit of FIG. 1, showing the entrance vane and contoured rifling liner segments of the main cylinder;
FIG. 6 is a plan view of the entrance vane of the tumbling unit of this invention;
FIG. 7 is a sectional view looking towards the inlet end showing the entrance vane of this invention;
FIG. 8 provides a plan view of the entrance vane and its various angled sides;
FIG. 9 provides a view of a plurality of liner segments showing a double contoured rifling formed centrally of each of the shown liner segments;
FIG. 10 is a view of a plurality of a the liner segments showing the contoured rifling having only one contoured surface on a side of each shown rifling;
FIG. 11 is a view of a plurality of liner segments showing the multi-contoured rifling of greater angular slant being formed centrally of each of the shown segments;
FIG. 12 is a perspective view of a liner segment showing the contoured rifling formed on its upper surface;
FIG. 13 shows a liner segment where one half of each contoured rifling is integrally formed at each side edge of the shown segments;
FIG. 14 is an end view of the contoured rifling shown in FIG. 11;
FIG. 15 is an end view of the contoured rifling shown in FIG. 10; and
FIG. 16 is a perspective view of a liner segment having contoured rifling providing upon the inner surface and a contoured vane provided upon its outer surface, which when the liner segments are assembled into the formation of the inner cylinder, the contoured vanes locate intermediate the inner cylinder and the outer cylinder of the unit.

### DESCRIPTION OF PREFERRED EMBODIMENTS

The concept of this invention, as previously summarized, is generally the provision of various machines that process castings, products, or other components, generally to provide for their cleaning, such as for the removal of mold sand from castings, at the foundry, the cleaning and reclaiming of mold sand in preparation for further usage, or for processing slag, dross, other metal pieces, as known in the art. The applicants herein have obtained a variety of patents upon their significant innovations in this particular art, and these types of machines can be seen in the various patents to Didion, as reviewed in the Background of the Invention. These machines are substantially large, they can be anywhere from 15 to 70 feet long, 4 to 14 feet in diameter, and when operated, normally run continuously, to attain the results as previously described.

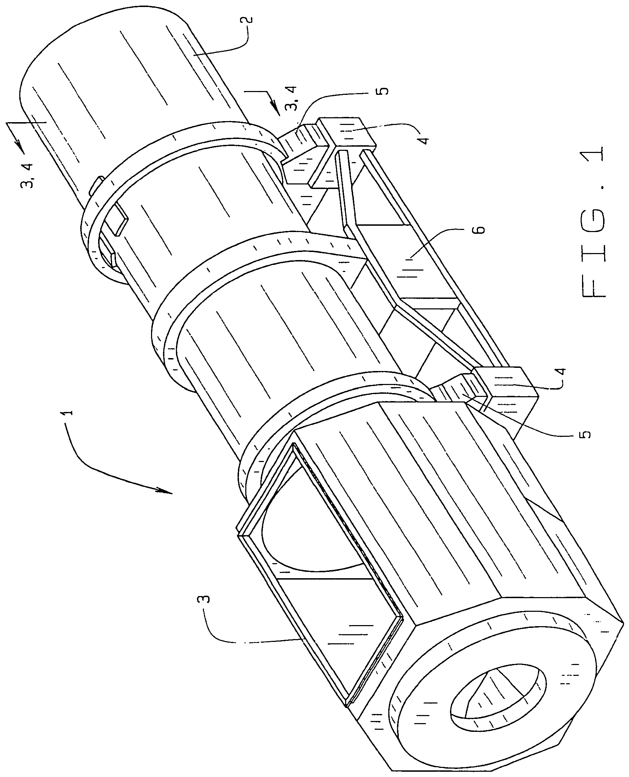

An example of one such machine is shown in FIG. 1, wherein there is shown a sand reclaiming drum 1 as known in the art. This particular drum includes its main cylinder, as at 2, and has a fines or dust collector, as at 3, at its front end, as noted. It operates upon a base 4 and has a series of roller bearings, as at 5, to accommodate its rotation. A motor is normally contained at 6, to attain rotation of the cylinder 2.

As well known in the prior art, the operation of these machines normally is in a singular direction of rotation, usually clockwise, continuously, as stated, until the components would wear out, such as the cylinder or liner segments contained within the cylinder 2, at which time these components would require repair or replacement. But, the essence of this invention is that the various rifling, vanes, and other components that process the castings within the cylinder are formed and adapted for allowing the processing of product when the cylinder is rotated even in the opposite direction, such as a counterclockwise direction, and therein provides for a double time usage in the operations of the machine, so that when it appears that the machine may be wearing out when rotated in one direction, it simply can be rotated in the opposite direction, and extend the useful life of operation of the machine for twice the time. Hence, it can be seen that this machine, of the new design, when operated for cleaning product, can be rotated in a clockwise direction for some time, and then reversed and continued to be operated in the counterclockwise direction, and these may be alternated in usage until such time as it appears that the cylinder or liner segments are uniformly wearing out, and at that time, and require replacement. Thus, the life of operation of the machine is doubled, which is of real benefit and cost savings to the user, and delays necessary repairs, until a much later time.

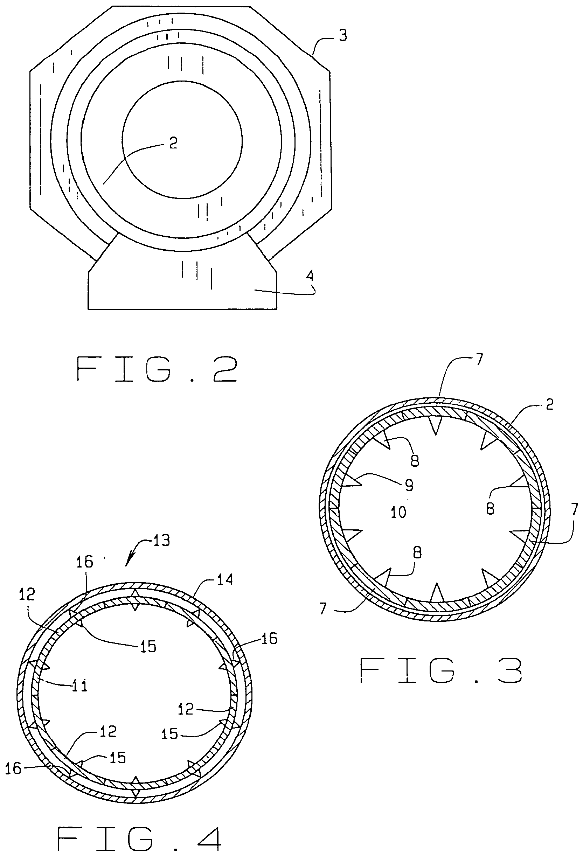

FIG. 2 provides an inlet end view of the unit as disclosed in FIG. 1.

An embodiment herein, generally, can be seen in FIG. 3. The cylinder 2 contains a series of liner segments 7, which when assembled circumferential interior within the cylinder 2, form an interior cylinder having a series of integral rifling 8 therein, and as will be subsequently described, it can be seen that these rifling have sloped surfaces, as at 9 and 10, as will be subsequently analyzed, and these rifling are provided for tumbling, moving, and generally processing any castings, sand, or products that are introduced through the inlet end of the tumbling unit, in preparation for their further processing. The various lateral faces 9 and 10 are unique to the operations of this device, and will be subsequently analyzed in greater detail, as to how they are formed, what type of contours the sides of the rifling may have, in order to achieve their intended purposes. Nevertheless, as can be generalized upon reviewing FIG. 3, since the rifling appears to be of uniform construction to either side, or having a particular slanted design, it can be understood that the tumbling unit can be turned in either a clockwise or counterclockwise direction, for processing of the castings and other products located within the tumbling unit during its operations.

The rifling is shown as being formed upon the liner segments 7. Generally the rifling will be formed integrally upon liner segments, so that when there is a wear out of these components, the liner segments can be replaced, as has been known in the art, and as can be determined from review of the prior Didion patents as described herein.

The concept of the invention will be used with dual or multi-cylindered tumbling units. FIG. 4 shows a dual chamber, wherein the main cylinder 11, which can be formed of various liner segments 12, as previously reviewed, in this particular instance, forms the inner cylinder for the tumbling unit 13. Then, an outer cylinder 14 holds the liner segments 12 in position, within the outer cylinder 14, and these liner segments not only include the inner rifling 15 as previously described, but further is formed having the contoured vanes 16 that when the inner cylinder is formed, they rest upon the interior of the outer cylinder 14, in their assembly. Hence, product that is delivered through the inlet end 2 of the unit will be processed and cleaned within the inner cylinder 11, through the tumbling action achieved through its rotation, and when the castings encounter the rifling 15, such can either move the castings along the cylinder, during its operation, or move the castings in an opposite direction, or simply stationarily tumble the castings usually at the mid point of the tumbling unit, during its operations.

As will be subsequently shown, the tumbling unit, particularly within its interior, may have various sections along its length. One section may provide for initial tumbling of the castings, as they enter into the tumbling unit, a midsection may have more stationary type of rifling, that tumbles the castings in place, but does not significantly move them along the tumbling unit, and then the end section of the cylinder 2 or 11 may either further tumble the castings, to provide them with a final cleansing, or the rifling may be oriented to move the castings out of the tumbling unit, or the rifling may be contoured to move the castings back into the midsection of the unit, for further tumbling and their cleaning. These are just examples of the versatility of the structure of the fabricated tumbling unit, and how it may be multi-operational to process that type of castings, products, or sand that are being processed at the customer's plant, and which can further be operated in either a clockwise or counterclockwise direction, to enhance the useful life of the tumbling unit, over its lengthy continuous operations.

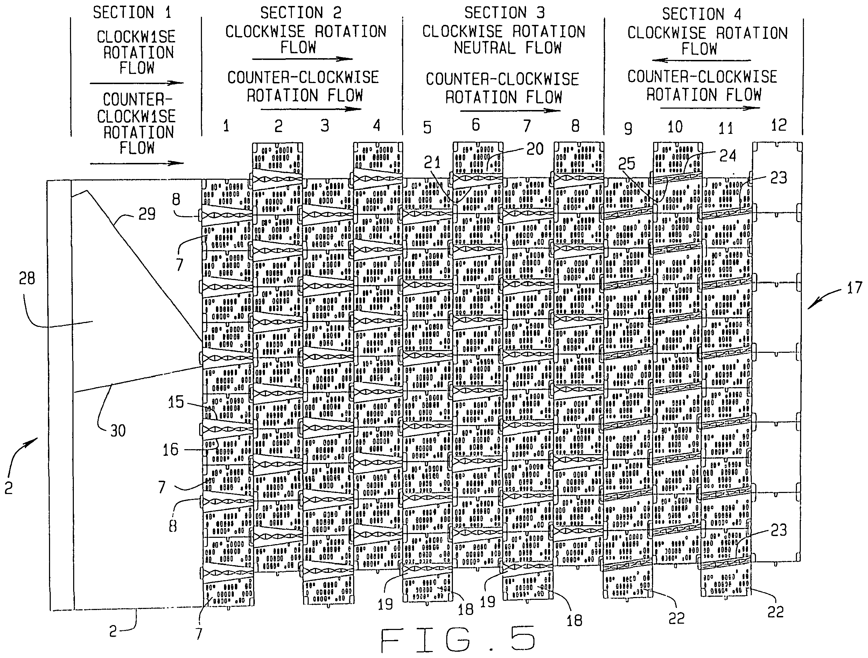

To provide further details relating to the formation of the various rifling 8 and 15 of this invention, reference is made to FIG. 5. As can be noted, each liner segment 7 has at least an integral rifling 8 provided thereon, and which extends interiorly of the cylinder 2. As can be seen, each of these rifling has a sloped lateral surface, as at 15 and 16, which are contoured angulating inwardly, towards the outlet end 17 of the formed cylinder. As noted, the angle of inclination of these rifling contoured surfaces 15 and 16, at the second section of the cylinder are angled inwardly, approximately 7° each, in their formation. Thus, any castings or products deposited into the inlet end of the tumbling cylinder, will gradually be moved to the right, further inwardly of the formed cylinder, and towards its outlet end 17. This is regardless whether the cylinder is rotated in a clockwise or counterclockwise direction of rotation.

As then can be seen in section 3 of the cylinder, which is the midpoint section of the cylinder, each liner segment 18 has an integral rifling 19 provided thereon. But as can be seen, the contoured sides of these riflings, as noted at 20 and 21, have different slopes. The surface or side 20 is straight, and does not incline with respect to the longitudinal axis of the cylinder. The opposite side 21 is formed at the same angle of 7°, and thus, as can be noted, for this midsection or section 3 of the tumbling unit, when the unit is rotated in a clockwise direction, the side 20 of each rifling, which has no contour to it, will simply tumble the castings or product continuously in place within this central section of the cylinder, during its operations in that direction of rotation. But, should the cylinder be reversed in its rotation, or turned in a counterclockwise direction, then the castings will encounter the sloped sides 21 of the rifling within this midsection of the cylinder, and have a slow flow rate towards the outlet end 17 of the tumbling unit. Thus, if the operators know that the castings need substantial tumbling to provide for their cleansing, then he/she will rotate the cylinder for some time in the clockwise direction of rotation. And, when they believe that the castings are sufficiently cleaned, they simply can reverse the rotation of the cylinder, into a counterclockwise direction of rotation, in order to urge the castings down stream of the cylinder and towards the outlet end 17.

As can be seen in what is identified as the section 4, or end section of the cylinder, there are likewise a series of liner segments 22 provided. The rifling provided at this section, as seen at 23, have additional sloped contours 24 and 25, as noted. In this instance, since these contours are approximately 7° off the longitudinal axis of the cylinder, when the unit is rotated in a clockwise direction, the castings will encounter the contoured side edge 24 of the shown rifling. In this instance, the castings will be moved back towards the center section 3, of the cylinder, for further tumbling therein. But, when the cylinder is rotated in a counterclockwise direction, the castings will encounter these contoured surface 25 of the rifling, and be urged towards the outlet end 17 of the unit, for completion of their tumbling process.

Thus, as can be readily understood, it can be seen how the control of movement of the castings or products being cleaned through the tumbling unit can be regulated by the surface contour of the various riflings provided therein when the interior of the cylinder is formed from the plurality of liner segments 7, 18, and 22. Obviously, the degree of contour of the sides of each of these rifling can be at any angle as required by the manufacturer in the usage of the tumbling unit within the plant. These contours may be at any select degrees, whether it be at a 0°, as noted for the lateral contour 20 for the rifling at the midsection of the cylinder, or at a 7° slant, as noted at 15 and 16 for the intake section, or section 2 of the cylinder, or may have slope as noted for the sides 24 and 25, of the rifling, as previously explained. These slopes may be at any angle, whether it be at 5, 10, or 15 degrees off the longitudinal axis, in order to attain the required volume-metric flow of the castings, the amount of time that it is desired to have the castings remain in the tumbling unit, in order to achieve the degree of cleansing as desired. The particular slope and configuration for the rifling, and for that matter, the integral vanes provided upon the outer surface of the liner segments, will be analyzed in greater detail subsequently.

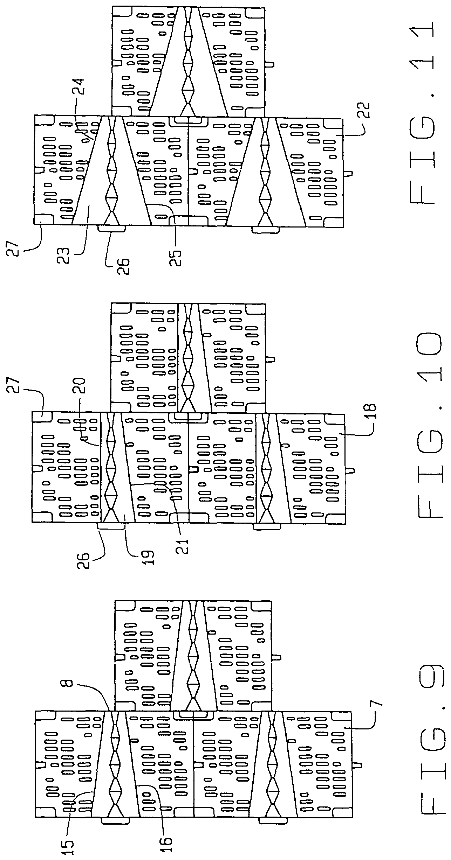

FIG. 9, 10, and 11 provide a slightly enlarged views of the various liner segments, such as for the section 2, section 3, and section 4 for the formed cylinder, and how there are various contoured side surfaces for each of the rifling, for the purposes as previously described. In FIG. 11, it can be seen that the contour of the rifling, along the lateral side edges, are to a greater degree, and in this particular instance may be as great as 15° on each side, such as at the outlet end of the cylinder, in order to provided for an aggressive push of the cleaned castings or product from the tumbling unit, after completion of a tumbling cycle. Obviously, these various types of liner segments, with their contoured rifling, could be located at various sections within the formed cylinder, depending upon the speed at which the castings are desired to be moved through the tumbling unit, during their processing. As can further be seen, and as noted in prior Didion patents, these liner segments are inter-connectable together, usually staggered in their connected relationship, through the usage of various tongues 26 and grooves 27, when the liner segments are inter-fitted together, to form a circumferential liner within the main cylinder for the tumbling unit.

As can also be seen in FIG. 5, there is an entrance vane, as at 28, provided at the inlet end 2 of the cylinder of the tumbling unit. The purpose of this entrance vane is to provide for, in addition, a controlled movement of castings or other products to be cleaned into the tumbling unit initially. As noted, and as further can be seen

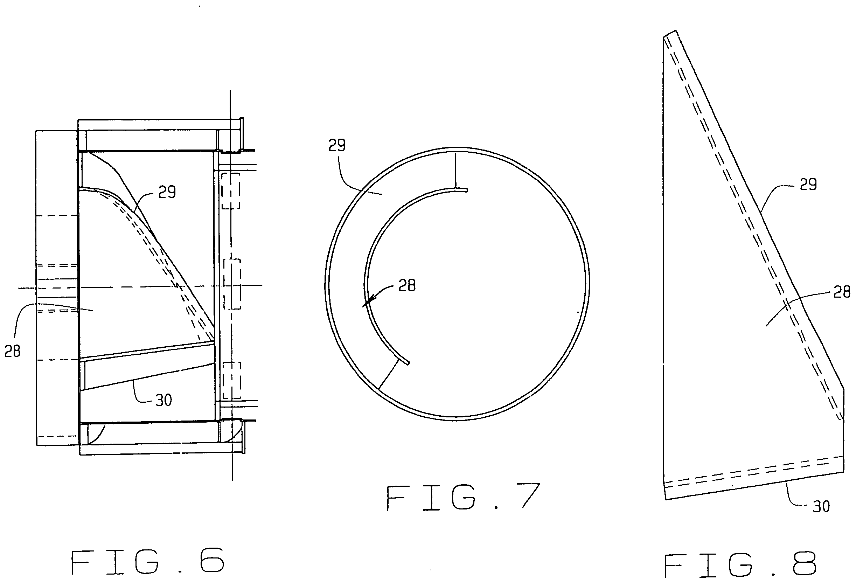

in FIGs. 6 - 8, the entrance vane 28 also has a pair of contoured edges 29 and 30. The contour 29 is at an approximate 65° pitch, such that when the cylinder is rotated in a clockwise direction, it provides for an accelerated flow of the castings into the main cylinder of the tumbling unit. Obviously, this degree of pitch can be to any angle, anywhere between 30-75 degrees off of the longitudinal axis of the cylinder, in order to provide for that quick flow of the castings into the unit for processing. The opposite contoured edge 30 may be at a lesser degree of slope, off of the longitudinal axis, and while it is shown at an approximate 15° angle, it also could be of a lesser angle, or greater, to provide for a slower urging of castings into the cylinder, which once again depends upon the capacity that the tumbling unit can process, at any given time, and how fast the castings need to be urged into the cylinder, for a cleaning operation. Thus, when the unit is turned in a clockwise direction of rotation, then the surface 30 acts upon the entering castings, and urges them at a lower volume and slower pace into the tumbling unit, during its functioning. The degree of slant for the surface 30 could be, more or less, below 5° to 20°. These Figures 6-8 show the location of the entrance vane 28 at the inlet end for the main cylinder of the tumbling unit.

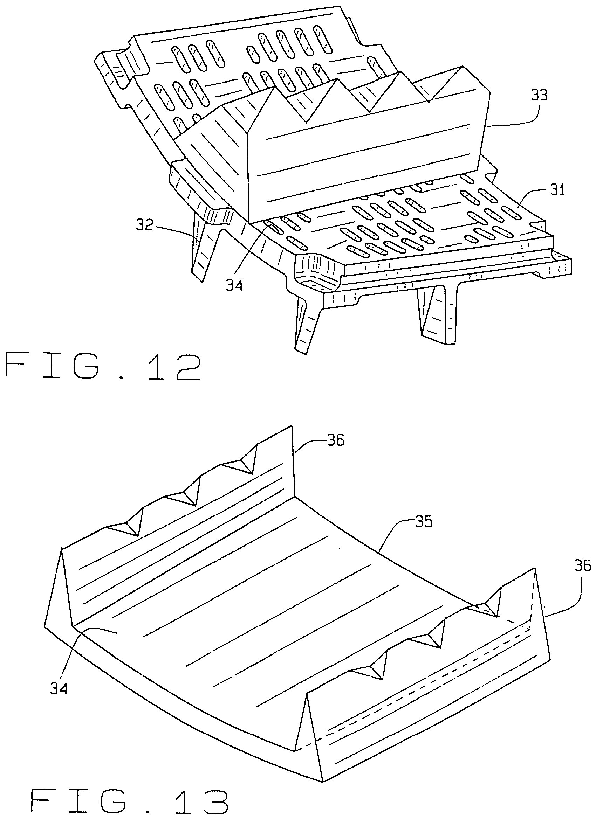

FIG. 12 discloses a liner segment 31 and as can be seen, these segments are similar to that as shown at 7, 18, and 22, and which form the interior surface of the main cylinder 2 of the unit. The contoured vane, as at 32, is integrally formed upon the outer surface of the segment 31, and contoured rifling 33 are provided upon the inner surfaces of the liner segments. Just like the contoured rifling 33, the vanes 32 may likewise have continuous angles upon their length, when these vanes are arranged intermediate the formed inner cylinder 2, and the outer cylinder 14, as shown in FIG. 4, for the dual cylindered tumbling unit according to the present invention. In this instance, the rifling and vanes are provided, and integrally cast, or fabricated upon the inner and outer surfaces of the shown liner segment 31. As also noted, there are the plurality of perforations 34 formed through each liner segment, particularly when a dual cylindered unit is being formed, so that the sand, debris, and other fines can fall through the liner segments, and into the outer cylinder, to be moved by the vanes 32, either towards the entrance end, or the outlet end, of the tumbling unit, for collection or disposal.

FIG. 13 shows the type of liner segment 35 that can be used for forming the singular cylinder 2 of the tumbling unit. Once again, the interiorly extending rifling can be located at the midpoint or ends of the liner segments, as noted in FIG.12, or one half of each liner segment can be formed, as at 36, at each end edge of the segment 35, so that when a series of liner segments are assembled together, in a circumferential pattern, to form the interior of the cylinder 2, the complimentary half of the rifling of the adjacent liner segments will form a complete rifling, to function in the manner as described for the various liner segments as shown an explained for FIG. 5.

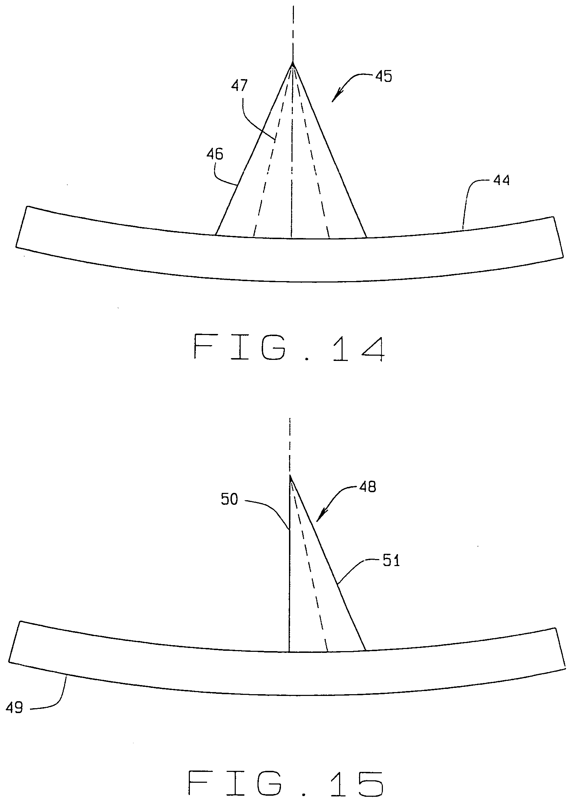

FIG. 14 shows a style of liner segment 44 for forming the inner lining of the cylinder 2, wherein the rifling 45 extends inwardly, generally at the midpoint of the shown segment 44. And, the intake end of the rifling, as at 46, is wider than the outlet end 47, so as to provide the degree of slope longitudinally, as previously explained, with respect to the contoured side 46 to 47 of the liner segment 44. Thus, there is a degree of slope, in this particular instance, as shown in FIG. 14, that extends from the inlet side to the outlet edge of the shown rifling, at the degrees selected when the liner segments are cast, in order to provide that degree of movement, speed of flow, and volumetric capacity for processing of castings within the tumbling unit, during its functioning. These may be the type of rifling as explained in FIG. 9, and as shown in section 2 of FIG. 5, for the assembled liner segments.

FIG. 15 shows the type of rifling, as at 48, formed upon the inner surface of the liner segment 49, and in this instance, this comprises the style of rifling as explained in FIG. 10, and as shown in the midsection 3 of the main cylinder as disclosed in FIG. 5. In this instance, one side of the rifling may be straight, as at 50, so as to simply tumble the castings as the cylinder is rotated in a clockwise direction, but the opposite side surface 51, will have an angulated contour, sloping towards the outlet end of the cylinder, so as to move the castings towards that end of the cylinder when it is rotated in a counterclockwise direction of movement.

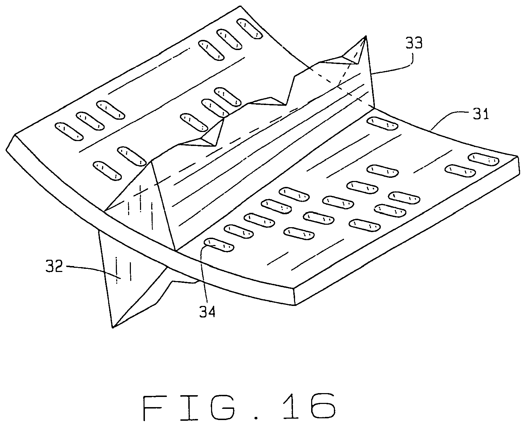

FIG. 16 shows a further variation upon a liner segment, similar to the liner segment 31, which forms the inner cylinder for the shake-out unit. It will have upon its inner surface integrally formed the rifling 33, as previously described, and which may have a contour, upon each side, along its length, somewhere between 0 to 15 degrees, or more, of slope. The slope is primarily along the length, in order to induce the metallics to be urged towards the outlet end of the unit, during application. But, in this instance, there will be a similar formed vane 32 integrally formed upon its intended outer surface, and that particular vane will have a similar shape, and be contoured as previously explained, along its length, just as the rifling 33 formed upon its inner surface of the liner segment 31. Thus, when the liner segments are formed into the inner cylinder or shell for the shake-out or sand reclaimer, a series of these outer vanes 32 will likewise be provided, for urging the sand or oxides in a particular longitudinal direction, at a specified quantity and capacity as desired by the operator, depending upon the direction of rotation of the unit, during its application and usage.

The foregoing are examples of the various designed configurations for the rifling, the vanes, the inlet vanes, as mentioned partly for the tumbling cylinder according to the present invention. These specific degrees of slope particularly to the sides of the rifling, or the intermediate vanes, between cylinders, can be to various other angulated degrees, along the longitudinal axis of the unit, as previously explained, in order to provided for a controlled cleaning of the castings, metallics, products, or other elements to be cleaned within the tumbling unit. Obviously, other degrees of slope, along the longitudinal axis, for these components, may be designed into the tumbling unit, as may be determined most feasible for usage for the operations of the tumbling unit for the particular customer involved.

## Claims

1. A multi-directional tumbling cylinder (1) for use in concentrating or cleaning of products such as dross, salt cake, slag, or cast or molded metal pieces, comprising,
- at least one cylinder (2) having a length,
said cylinder (2) capable of turning in a clockwise or counterclockwise direction,
said length of cylinder (2) having an intake end and outlet end (17),
- a series of rifling (8, 19, 23, 33) provided upon the inner surface of said cylinder (2) and useful during rotation of said cylinder (2) to process the product deposited therein,
each of said rifling (8, 19, 23, 33) having a length, and
each length of rifling (8, 19, 23, 33) having a pair of lateral sides (15, 16; 20, 21; 24, 25),
wherein when said cylinder (2) is rotated in a clockwise direction the product contained therein will be tumbled or moved in a direction upon encountering one side (15, 20, 24) of said series of rifling (8, 19, 23, 33), and
when said cylinder (2) is rotated in a counterclockwise direction, the product is tumbled or moved through its encountering the other side (16, 21, 25) of said rifling (8, 19, 23, 33),
- a main product discharge is at the outlet end (17) opposite from the intake end for longitudinal movement of the product during rotation; and
- at least one side (15, 16, 20, 21, 24, 25) of the length of rifling (8, 19, 23, 33) is slanted either forwardly or rearwardly to the length of the cylinder thereby having a longitudinal pitch,
**characterized by**
- the cylinder (2) being formed of liner segments (31) inter-fitted together,
- the liner segments (31) having
the rifling (33) being integrally formed upon their interior surfaces and
a series of vanes (32) being integrally molded extending outwardly from the liner segments (31), and being disposed intermediate the outer surface of the liner segments (31) and the inner surface of an outer cylinder (14), wherein said vanes (32) have a similar shape and are contoured along its length as said riflings (33).

2. The tumbling cylinder of claim 1, wherein each of said rifling (8, 19, 23, 33) has a longitudinal pitch on one side (15, 20, 24) and another longitudinal pitch on its other side (16, 21, 25), wherein each side (15, 16, 20, 21, 24, 25) of the rifling (8, 19, 23, 33) will effect a select processing of product depending upon the direction of rotation of said cylinder (2).

3. The tumbling cylinder of claim 2, wherein the pitch of each rifling (8, 19, 23, 33) on one side (15, 20, 24) is zero degrees, and the pitch of the rifling (8, 19, 23, 33) on its opposite side (16, 21, 25) is seven or fifteen degrees.

4. The tumbling cylinder of claim 1, wherein:
- the pitch of the rifling (8, 19, 23, 33) on one side (15, 20, 24) is seven degrees, and the pitch of the rifling (8, 19, 23, 33) on the opposite side (16, 21, 25) is seven or fifteen degrees; or
- the pitch of the rifling (8, 19, 23, 33) on one side (15, 20, 24) is fifteen degrees, and the pitch of the rifling (8, 19, 23, 33) on its opposite side (16, 21, 25) is fifteen degrees.

5. The tumbling cylinder of claim 2, wherein the pitch of the rifling (8, 19, 23, 33) on one side (15, 20, 24) is greater than seven degrees, and the pitch of the rifling (8, 19, 23, 33) on the opposite side (16, 21, 25) of said rifling is less than seven degrees.

6. The tumbling cylinder of claim 2, wherein the longitudinal pitch on one side (15, 20, 24) of the rifling (8, 19, 23, 33) slants towards the outlet end (17) of said cylinder (2), and the pitch of the rifling (8, 19, 23, 33) on its opposite side (16, 21, 25) extends towards to the said outlet end (17), and during rotation of said cylinder (2) provides for movement for product towards the outlet end (17) of said cylinder (2) regardless that the cylinder (2) may be rotated in either a clockwise or counterclockwise direction.

7. The tumbling cylinder of claim 6, wherein the longitudinal pitch of the rifling (8, 19, 23, 33) on one side (15, 20, 24) is different from the longitudinal pitch of the rifling (8, 19, 23, 33) on its other side (16, 21, 25), and said rifling (8, 19, 23, 33) moves the product therein towards said outlet end (17) in differing volumes when said cylinder (2) is rotated in either a clockwise or counterclockwise direction.

8. The tumbling cylinder of claim 2, wherein the longitudinal pitch on each side (15, 20, 24) of said rifling (8, 19, 23, 33) is different from the pitch on the other side (16, 21, 25) of said rifling (8, 19, 23, 33), such that when said cylinder (2) is rotated in a clockwise direction the product will move towards the inlet or outlet (17) of the cylinder (2) at one speed, and when the cylinder (2) is rotated in a counterclockwise direction it will move the product towards the inlet or outlet (17) of said cylinder (2) at a different volume and speed.

9. The tumbling cylinder of claim 2, wherein the pitch on one side (15, 20, 24) of said rifling (8, 19, 23, 33) is at zero degrees, so as to effect a tumbling of product within said, preferably wherein said zero degree pitch (20) upon the rifling (8, 19, 23, 33) is located proximately centrally ('section 3') of said tumbling unit (1).

10. The tumbling cylinder of claim 1, and including an entrance vane (28) provided at said intake end of said cylinder (2), said entrance vane (28) having at least one face (29) extending angularly relative to the longitudinal axis of said cylinder (2), such that when said cylinder (2) is rotated in one direction thereby forcing a volume of product into the cylinder (2) for a tumbling process.

11. The tumbling cylinder of claim 10, wherein said entrance vane (28) having another face (30) extending approximately longitudinally within said cylinder (2), and said another face (30) of the entrance vane (28) having a different angular relationship with the longitudinal axis of the cylinder (2) for providing a slower volumetric movement of product within the cylinder (2) during performance of a tumbling process.

12. The tumbling cylinder of claim 11, wherein the faces (29, 30) of the entrance vane (28) extending angularly longitudinally within said cylinder (2) are of different angles to move different volumes of product into the cylinder (2) for a tumbling process depending upon the direction of rotation of said tumbling cylinder (2) during usage.

13. The multi-directional tumbling cylinder (1, 13) of claim 1, wherein said outer cylinder (14) encircling at least a portion of said at least one cylinder (2, 11), a series of lengths of said vanes (16, 32) provided between said one cylinder (2, 11) and said outer cylinder (14), said vanes (16, 32) disposed for movement of any residue product falling through said one cylinder (2, 11) and into the outer cylinder (14) and moving the residue product towards the intake end or the outlet end (17) of said tumbling cylinder (1, 13) for collection or disposal.

14. The tumbling cylinder of claim 13, wherein said tumbling cylinder (1, 13) is formed of segments (12, 31), formed as sectors of the cylinder (2, 11), preferably said segments (12, 31) being perforated (34), and rifling (8, 19, 23, 33) integrally formed upon the inner surface of said segments (12, 31), and length of said vanes (16, 32) integrally formed with the outer surface of each segment (12, 31), such that a series of said segments (12, 31) can be interconnected together to form the tumbling cylinder (1, 13) of said device.

15. The tumbling cylinder of claim 1, wherein said tumbling cylinder (1, 13) and its rifling (8, 19, 23, 33) are formed of segments (36), that are interconnected together to form a cylindrical tumbling unit (1, 13) for this device.

## Patentansprüche

1. Ein multidirektionaler Trommelzylinder (1) zur Verwendung beim Konzentrieren oder Reinigen von Produkten wie Krätze, Salzkuchen, Schlacke oder gegossenen oder geformten Metallstücken, der Folgendes aufweist,
- mindestens einen Zylinder (2) mit einer Länge, wobei sich der Zylinder (2) im oder gegen den Uhrzeigersinn drehen kann, wobei die Länge des Zylinders (2) ein Einlassende und ein Auslassende (17) aufweist,
- eine Reihe von Riffelungen (8, 19, 23, 33), die auf der Innenfläche des Zylinders (2) vorgesehen sind und während der Drehung des Zylinders (2) dazu dienen, das darin abgelagerte Produkt zu verarbeiten,
jede der Riffelungen (8, 19, 23, 33) hat einen Abschnitt, und
jeder Abschnitt der Riffelung (8, 19, 23, 33) hat ein Paar Seitenflächen (15, 16; 20, 21; 24, 25),
wobei, wenn der Zylinder (2) im Uhrzeigersinn gedreht wird, das darin enthaltene Produkt beim Auftreffen auf eine Seite (15, 20, 24) der Reihe von Riffelungen (8, 19, 23, 33) umgeworfen oder in eine Richtung bewegt wird, und
wenn der Zylinder (2) gegen den Uhrzeigersinn gedreht wird, wird das Produkt durch sein Auftreffen auf die andere Seite (16, 21, 25) der Riffelung (8, 19, 23, 33) umgeworfen oder bewegt,
- ein Hauptproduktauslass befindet sich am Auslassende (17) gegenüber dem Einlassende für die Längsbewegung des Produkts während der Drehung; und
- mindestens eine Seite (15, 16, 20, 21, 24, 25) der Riffelung (8, 19, 23, 33) ist entweder nach vorne oder nach hinten zur Länge des Zylinders geneigt und weist dadurch eine Längsteilung auf,
**gekennzeichnet durch**
- der Zylinder (2) ist aus ineinander gesteckten Buchsensegmenten (31) ausgebildet,
- die Buchsensegmente (31) weisen auf die Riffelung (33), die auf ihren Innenflächen einstückig ausgebildet ist und eine Reihe von Schaufeln (32), die einstückig geformt sind und sich von den Buchsensegmenten (31) nach außen erstrecken und zwischen der Außenfläche der Buchsensegmente (31) und der Innenfläche eines äußeren Zylinders (14) angeordnet sind,
wobei die Schaufeln (32) eine ähnliche Form haben und entlang ihrer Länge wie die Riffelung (33) konturiert sind.

2. Trommelzylinder nach Anspruch 1, wobei jede der Riffelungen (8, 19, 23, 33) auf einer Seite (15, 20, 24) eine Längsteilung und auf ihrer anderen Seite (16, 21, 25) eine andere Längsteilung aufweist, wobei jede Seite (15, 16, 20, 21, 24, 25) der Riffelung (8, 19, 23, 33) in Abhängigkeit von der Drehrichtung des Zylinders (2) eine ausgewählte Bearbeitung des Produkts bewirkt.

3. Trommelzylinder nach Anspruch 2, wobei die Steigung jeder Riffelung (8, 19, 23, 33) auf einer Seite (15, 20, 24) null Grad und die Steigung der Riffelung (8, 19, 23, 33) auf ihrer gegenüberliegenden Seite (16, 21, 25) sieben oder fünfzehn Grad beträgt.

4. Der Trommelzylinder nach Anspruch 1, wobei:
- die Steigung der Riffelung (8, 19, 23, 33) auf einer Seite (15, 20, 24) sieben Grad und die Steigung der Riffelung (8, 19, 23, 33) auf der gegenüberliegenden Seite (16, 21, 25) sieben oder fünfzehn Grad beträgt; oder
- die Steigung der Riffelung (8, 19, 23, 33) auf der einen Seite (15, 20, 24) fünfzehn Grad und die Steigung der Riffelung (8, 19, 23, 33) auf der gegenüberliegenden Seite (16, 21, 25) fünfzehn Grad beträgt.

5. Trommelzylinder nach Anspruch 2, wobei die Steigung der Riffelung (8, 19, 23, 33) auf einer Seite (15, 20, 24) mehr als sieben Grad beträgt und die Steigung der Riffelung (8, 19, 23, 33) auf der gegenüberliegenden Seite (16, 21, 25) der Riffelung weniger als sieben Grad beträgt.

6. Trommelzylinder nach Anspruch 2, wobei die Längssteigung auf einer Seite (15, 20, 24) der Riffelung (8, 19, 23, 33) zum Auslassende (17) des Zylinders (2) hin geneigt ist und die Steigung der Riffelung (8, 19, 23, 33) auf ihrer gegenüberliegenden Seite (16, 21, 25) sich in Richtung auf das Auslassende (17) erstreckt und während der Drehung des Zylinders (2) für eine Bewegung des Produkts in Richtung auf das Auslassende (17) des Zylinders (2) sorgt, unabhängig davon, dass der Zylinder (2) entweder im oder gegen den Uhrzeigersinn gedreht werden kann.

7. Trommelzylinder nach Anspruch 6, wobei die Längssteigung der Riffelung (8, 19, 23, 33) auf einer Seite (15, 20, 24) sich von der Längssteigung der Riffelung (8, 19, 23, 33) auf ihrer anderen Seite (16, 21, 25) unterscheidet und die Riffelung (8, 19, 23, 33) das darin befindliche Produkt in unterschiedlichen Volumina zum Auslassende (17) hin bewegt, wenn der Zylinder (2) entweder im Uhrzeigersinn oder entgegen dem Uhrzeigersinn gedreht wird.

8. Trommelzylinder nach Anspruch 2, wobei die Längsteilung auf jeder Seite (15, 20, 24) der Riffelung (8, 19, 23, 33) von der Teilung auf der anderen Seite (16, 21, 25) der Riffelung (8, 19, 23, 33) verschieden ist, so dass, wenn der Zylinder (2) im Uhrzeigersinn gedreht wird, sich das Produkt mit einer Geschwindigkeit zum Einlass oder Auslass (17) des Zylinders (2) bewegt, und wenn der Zylinder (2) gegen den Uhrzeigersinn gedreht wird, er das Produkt mit einem anderen Volumen und einer anderen Geschwindigkeit zum Einlass oder Auslass (17) des Zylinders (2) bewegt.

9. Trommelzylinder nach Anspruch 2, bei dem die Steigung auf einer Seite (15, 20, 24) der Riffelung (8, 19, 23, 33) null Grad beträgt, um ein Umwälzen des Produkts innerhalb der Riffelung zu bewirken, wobei sich die Null-Grad-Steigung (20) auf der Riffelung (8, 19, 23, 33) vorzugsweise in der Nähe der Mitte ("Abschnitt 3") der Trommeleinheit (1) befindet.

10. Trommelzylinder nach Anspruch 1, mit einer am Einlassende des Zylinders (2) vorgesehenen Eintrittsschaufel (28), wobei die Eintrittsschaufel (28) mindestens eine Fläche (29) aufweist, die sich winklig zur Längsachse des Zylinders (2) erstreckt, so dass, wenn der Zylinder (2) in eine Richtung gedreht wird, dadurch ein Produktvolumen für einen Trommelvorgang in den Zylinder (2) gedrückt wird.

11. Trommelzylinder nach Anspruch 10, wobei die Eintrittsschaufel (28) eine andere Fläche (30) aufweist, die sich ungefähr in Längsrichtung innerhalb des Zylinders (2) erstreckt, und die andere Fläche (30) der Eintrittsschaufel (28) eine andere Winkelbeziehung zur Längsachse des Zylinders (2) aufweist, um eine langsamere volumetrische Bewegung des Produkts innerhalb des Zylinders (2) während der Durchführung eines Trommelprozesses zu bewirken.

12. Trommelzylinder nach Anspruch 11, wobei die Flächen (29, 30) der Eintrittsschaufel (28), die sich winklig in Längsrichtung innerhalb des Zylinders (2) erstrecken, unterschiedliche Winkel aufweisen, um je nach Drehrichtung des Trommelzylinders (2) während des Gebrauchs unterschiedliche Produktvolumina für einen Umwälzvorgang in den Zylinder (2) zu bewegen.

13. Multidirektionaler Trommelzylinder (1, 13) nach Anspruch 1, wobei der äußere Zylinder (14) mindestens einen Teil des mindestens einen Zylinders (2, 11) umgibt, wobei eine Reihe von Längen der Schaufeln (16, 32) zwischen dem einen Zylinder (2, 11) und dem äußeren Zylinder (14) vorgesehen ist, wobei die Schaufeln (16, 32) so angeordnet sind, dass sie jegliches Restprodukt, das durch den einen Zylinder (2, 11) und in den äußeren Zylinder (14) fällt, bewegen und das Restprodukt in Richtung des Einlassendes oder des Auslassendes (17) des Trommelzylinders (1, 13) zur Sammlung oder Entsorgung bewegen.

14. Trommelzylinder nach Anspruch 13, wobei der Trommelzylinder (1, 13) aus Segmenten (12, 31) gebildet ist, die als Sektoren des Zylinders (2, 11)ausgebildet sind, wobei die Segmente (12, 31) vorzugsweise perforiert (34) sind und die Riffelung (8, 19, 23, 33) integral auf der Innenfläche der Segmente (12, 31) ausgebildet ist, wobei die Länge der Schaufeln (16, 32) einstückig mit der Außenfläche jedes Segments (12, 31) ausgebildet ist, so dass eine Reihe der Segmente (12, 31) miteinander verbunden werden kann, um den Trommelzylinder (1, 13) der Vorrichtung auszubilden.

15. Trommelzylinder nach Anspruch 1, **dadurch gekennzeichnet, dass** der Trommelzylinder (1, 13) und seine Riffelung (8, 19, 23, 33) aus Segmenten (36) gebildet sind, die miteinander verbunden sind, um eine zylindrische Trommeleinheit (1, 13) für diese Vorrichtung auszubilden.

## Revendications

1. Cylindre de culbutage multidirectionnel (1) destiné à être utilisé pour concentrer ou nettoyer des produits tels que des crasses, des gâteaux de sel, des scories ou des pièces métalliques coulées ou moulées, comprenant:
- au moins un cylindre (2) ayant une longueur,
ledit cylindre (2) étant capable de tourner dans le sens des aiguilles d'une montre ou dans le sens inverse des aiguilles d'une montre,
ladite longueur du cylindre (2) ayant une extrémité d'admission et une extrémité de sortie (17),
- une série de rayures (8, 19, 23, 33) prévues sur la surface intérieure dudit cylindre (2) et utiles pendant la rotation dudit cylindre (2) pour traiter le produit qui y est déposé,
chacune desdites rayures (8, 19, 23, 33) ayant une longueur, et
chaque longueur des rayures (8, 19, 23, 33) ayant une paire de côtés latéraux (15, 16 ; 20, 21 ; 24, 25),
dans lequel, lorsque ledit cylindre (2) tourne dans le sens des aiguilles d'une montre, le produit contenu dans celui-ci est culbuté ou déplacé dans une direction lors de sa rencontre avec un côté (15, 20, 24) de ladite série de rayures (8, 19, 23, 33), et
lorsque ledit cylindre (2) tourne dans le sens inverse des aiguilles d'une montre, le produit est culbuté ou déplacé par sa rencontre avec l'autre côté (16, 21, 25) desdites rayures (8, 19, 23, 33),
- une décharge principale de produit se trouve à l'extrémité de sortie (17) opposée à l'extrémité d'admission pour le déplacement longitudinal du produit pendant la rotation ; et
- au moins un côté (15, 16, 20, 21, 24, 25) de la longueur des rayures (8, 19, 23, 33) est incliné vers l'avant ou vers l'arrière par rapport à la longueur du cylindre, présentant ainsi un pas longitudinal,
**caractérisé en ce que**
- le cylindre (2) est formé de segments de revêtement (31) assemblés les uns aux autres,
- les segments de revêtement (31) présentant
les rayures (33) formés d'un seul tenant sur leurs surfaces intérieures, et
une série d'aubes (32) moulées d'un seul tenant et s'étendant vers l'extérieur à partir des segments de revêtement (31), et disposées entre la surface extérieure des segments de revêtement (31) et la surface intérieure d'un cylindre extérieur (14), dans lequel lesdites aubes (32) ont une forme similaire et sont profilées sur leur longueur en tant que lesdites rayures (33).

2. Cylindre de culbutage selon la revendication 1, dans lequel chacune desdites rayures (8, 19, 23, 33) présente un pas longitudinal sur un côté (15, 20, 24) et un autre pas longitudinal sur son autre côté (16, 21, 25), dans lequel chaque côté (15, 16, 20, 21, 24, 25) des rayures (8, 19, 23, 33) effectue un traitement sélectif du produit en fonction du sens de rotation dudit cylindre (2).

3. Cylindre de culbutage selon la revendication 2, dans lequel le pas de chaque rayure (8, 19, 23, 33) sur un côté (15, 20, 24) est de zéro degré et le pas des rayures (8, 19, 23, 33) sur son côté opposé (16, 21, 25) est de sept ou quinze degrés.

4. Cylindre de culbutage selon la revendication 1, dans lequel :
- le pas des rayures (8, 19, 23, 33) sur un côté (15, 20, 24) est de sept degrés et le pas des rayures (8, 19, 23, 33) sur le côté opposé (16, 21, 25) est de sept ou quinze degrés ; ou
- le pas des rayures (8, 19, 23, 33) sur un côté (15, 20, 24) est de quinze degrés et le pas des rayures (8, 19; 23, 33) sur le côté opposé (16, 21, 25) est de quinze degrés.

5. Cylindre de culbutage selon la revendication 2, dans lequel le pas des rayures (8, 19, 23, 33) sur un côté (15, 20, 24) est supérieur à sept degrés et le pas des rayures (8, 19, 23, 33) sur le côté opposé (16, 21, 25) desdites rayures est inférieur à sept degrés.

6. Cylindre de culbutage selon la revendication 2, dans lequel le pas longitudinal sur un côté (15, 20, 24) des rayures (8, 19, 23, 33) est incliné vers l'extrémité de sortie (17) dudit cylindre (2) et le pas des rayures (8, 19, 23, 33) sur son côté opposé (16, 21, 25) s'étend vers ladite extrémité de sortie (17) et, pendant la rotation dudit cylindre (2), permet le déplacement du produit vers l'extrémité de sortie (17) dudit cylindre (2), que le cylindre (2) tourne dans le sens des aiguilles d'une montre ou dans le sens inverse des aiguilles d'une montre.

7. Cylindre de culbutage selon la revendication 6, dans lequel le pas longitudinal des rayures (8, 19, 23, 33) sur un côté (15, 20, 24) est différent du pas longitudinal des rayures (8, 19, 23, 33) sur son autre côté (16, 21, 25), et lesdites rayures (8, 19, 23, 33) déplacent le produit à l'intérieur de celui-ci vers ladite extrémité de sortie (17) dans des volumes différents lorsque ledit cylindre (2) tourne dans le sens des aiguilles d'une montre ou dans le sens inverse des aiguilles d'une montre.

8. Cylindre de culbutage selon la revendication 2, dans lequel le pas longitudinal sur chaque côté (15, 20, 24) desdites rayures (8, 19, 23, 33) est différent du pas sur l'autre côté (16, 21, 25) desdites rayures (8, 19, 23, 33), de sorte que lorsque ledit cylindre (2) tourne dans le sens des aiguilles d'une montre, le produit se déplace vers l'entrée ou la sortie (17) du cylindre (2) à une vitesse, et lorsque le cylindre (2) tourne dans le sens inverse des aiguilles d'une montre, il déplace le produit vers l'entrée ou la sortie (17) dudit cylindre (2) à un volume et une vitesse différents.

9. Cylindre de culbutage selon la revendication 2, dans lequel le pas sur un côté (15, 20, 24) desdites rayures (8, 19, 23, 33) est de zéro degré, de façon à effectuer un culbutage du produit à l'intérieur dudit cylindre, de préférence dans lequel ledit pas de zéro degré (20) sur les rayures (8, 19, 23, 33) est situé à proximité du centre ('section 3') de ladite unité de culbutage (1).

10. Cylindre de culbutage selon la revendication 1, et incluant une aube d'entrée (28) prévue à ladite extrémité d'admission dudit cylindre (2), ladite aube d'entrée (28) ayant au moins une face (29) s'étendant angulairement par rapport à l'axe longitudinal dudit cylindre (2), de sorte que lorsque ledit cylindre (2) tourne dans un sens, cela force un volume de produit dans le cylindre (2) pour un processus de culbutage.

11. Cylindre de culbutage selon la revendication 10, dans lequel ladite aube d'entrée (28) a une autre face (30) s'étendant approximativement longitudinalement à l'intérieur dudit cylindre (2), ladite autre face (30) de l'aube d'entrée (28) ayant une relation angulaire différente avec l'axe longitudinal du cylindre (2) pour fournir un déplacement volumétrique plus lent du produit à l'intérieur du cylindre (2) pendant l'exécution d'un processus de culbutage.

12. Cylindre de culbutage selon la revendication 11, dans lequel les faces (29 ; 30) de l'aube d'entrée (28) s'étendant angulairement longitudinalement à l'intérieur dudit cylindre (2) ont des angles différents pour déplacer différents volumes de produit dans le cylindre (2) pour un processus de culbutage en fonction du sens de rotation dudit cylindre de culbutage (2) pendant l'utilisation.

13. Cylindre de culbutage multidirectionnel (1, 13) selon la revendication 1, dans lequel ledit cylindre extérieur (14) encercle au moins une partie dudit au moins un cylindre (2, 11), une série de longueurs desdites aubes (16, 32) étant prévue entre ledit un cylindre (2, 11) et ledit cylindre extérieur (14), lesdites aubes (16, 32) étant disposées pour déplacer tout produit résiduel tombant à travers ledit un cylindre (2, 11) et dans le cylindre extérieur (14) et déplacer le produit résiduel vers l'extrémité d'admission ou l'extrémité de sortie (17) dudit cylindre de culbutage (1, 13) pour la collecte ou l'élimination.

14. Cylindre de culbutage selon la revendication 13, dans lequel ledit cylindre de culbutage (1, 13) est formé de segments (12, 31), formés comme des secteurs du cylindre (2, 11), de préférence lesdits segments (12, 31) étant perforés (34), et de rayures (8, 19, 23, 33) formées d'un seul tenant sur la surface intérieure desdits segments (12, 31), et la longueur desdites aubes (16, 32) formées d'un seul tenant avec la surface extérieure de chaque segment (12, 31) est telle qu'une série desdits segments (12, 31) peut être interconnectée ensemble pour former le cylindre de culbutage (1, 13) dudit dispositif.

15. Cylindre de culbutage selon la revendication 1, dans lequel ledit cylindre de culbutage (1, 13) et ses rayures (8, 19, 23, 33) sont formés de segments (36) qui sont interconnectés ensemble pour former une unité de culbutage cylindrique (1, 13) pour ce dispositif.
